# EUROPÄISCHE PATENTSCHRIFT

(11) **EP 3 567 442 B1**
(45) Veröffentlichungstag und Bekanntmachung des Hinweises auf die Patenterteilung: **06.10.2021**
(21) Anmeldenummer: 18171143.3
(22) Anmeldetag: 08.05.2018
(51) Int. Cl.: G05B 19/418, B65G 54/02, B23Q 15/24, H04L 12/18, H04H 20/28

(54) **TRANSPORTSYSTEM**
TRANSPORT SYSTEM
SYSTÈME DE TRANSPORT

(43) Veröffentlichungstag der Anmeldung: 13.11.2019
(73) Patentinhaber: Schneider Electric Industries SAS, 92500 Rueil-Malmaison (FR)
(72) Erfinder: WURTH, Ruediger, 77654 Offenburg (DE); GRAEWE, Joern, 63739 Aschaffenburg (DE); STOLLBERGER, Martin, 97297 Waldbüttelbrunn (DE); ROTHAUG, Andreas, 97839 Esselbach (DE); JANEK, Gunther, 63773 Goldbach (DE)
(74) Vertreter: Manitz Finsterwald Patent- und Rechtsanwaltspartnerschaft mbB

(56) Entgegenhaltungen:
- EP-A1- 3 173 363
- WO-A1-96/27544
- WO-A1-2004/067416

## Beschreibung

Die vorliegende Erfindung betrifft ein Transportsystem, insbesondere ein Multi-Carrier-System. Das Transportsystem umfasst eine Zentralsteuerung und mehrere Antriebseinheiten. Die Antriebseinheiten sind mittels einer Datenverbindung mit der Zentralsteuerung gekoppelt. Das Transportsystem umfasst außerdem mehrere Transportelemente, welche mittels der Antriebseinheiten bewegbar sind und/oder bewegt werden. Die Zentralsteuerung ist ausgebildet, Steuerbefehle an die Antriebseinheiten zu übermitteln, wobei die Steuerbefehle die Antriebseinheiten zu einer Bewegung der Transportelemente in Abhängigkeit der Steuerbefehle veranlassen.

Aus der WO 96/27544 A1 ist ein Transportsystem gemäß dem Oberbegriff des Anspruchs 1 bekannt. Die WO 2004/067416 A1 beschreibt ein Transportsystem, bei welchem verschiedene Motorsteuerungen mittels Broadcast-Nachrichten angesprochen werden.

Bei Transportsystemen, insbesondere in ihrer Ausbildung als Multi-Carrier-System, können verschiedene Transportelemente mittels der Antriebseinheiten bewegt werden, bevorzugt unabhängig voneinander. Die unabhängige Bewegung der Transportelemente ermöglicht es, das Transportsystem flexibel an verschiedene Aufgaben anzupassen. Insbesondere kann durch die einzeln und separat voneinander bewegbaren Transportelemente z.B. ein flexibel anpassbarer industrieller Prozess verwirklicht werden.

Nachteiligerweise ist es bei herkömmlichen Transportsystemen mit einem hohen Aufwand verbunden, die Transportelemente einzeln anzusteuern. Beispielsweise ist es bekannt, zwischen der Zentralsteuerung und den Antriebseinheiten eine sehr große Anzahl von Datenpfaden einzurichten, wobei so viele Datenpfade angelegt werden, dass in jeder Antriebseinheit die theoretisch maximale Anzahl an Transportelementen angesprochen bzw. adressiert werden kann. Unter einem Datenpfad ist eine z.B. von einem Feldbus bereitgestellte vordefinierte Route zur Übertragung von Daten zu verstehen. Durch die große Anzahl der Datenpfade müssen sämtliche dieser Datenpfade in der Datenverbindung freigehalten werden, wodurch eine hohe Bandbreite der Datenverbindung benötigt wird bzw. wobei eine hohe Bandbreite dauerhaft belegt wird.

Ebenso ist es bekannt, zwischen die Zentralsteuerung und die Antriebseinheiten ein "Gateway" zu schalten, wobei das Gateway den verschiedenen Antriebseinheiten dann verschiedene Steuerbefehle zukommen lässt. Bei diesem Vorgehen muss das zusätzliche Gateway implementiert und bereitgestellt werden, was zu zusätzlichen Kosten für das Transportsystem führen kann.

Es ist daher die der Erfindung zugrundeliegende Aufgabe, ein Transportsystem der eingangs genannten Art so weiterzubilden, dass ein kostengünstiges und zugleich leistungsfähiges Transportsystem angegeben wird.

Diese Aufgabe wird erfindungsgemäß durch ein Transportsystem gemäß Anspruch 1 gelöst.

Insbesondere wird die Aufgabe dadurch gelöst, dass zumindest zwei der Antriebseinheiten, bevorzugt eine Vielzahl und/oder die Mehrheit der Antriebseinheiten, besonders bevorzugt alle Antriebseinheiten, dieselben Steuerbefehle erhalten. Dies kann beispielsweise bedeuten, dass die Antriebseinheiten dieselben Steuerbefehle empfangen.

Die Erfindung macht sich die Erkenntnis zunutze, dass durch das Übertragen derselben Steuerbefehle an verschiedene Antriebseinheiten die aufwendige initiale Festlegung einer hohen Anzahl an Datenpfaden vermieden werden kann. Stattdessen ist es erfindungsgemäß z.B. möglich, dass die Antriebseinheiten selbst den Steuerbefehlen nur die jeweils für sie relevanten Befehle (d.h. Steuerbefehle) entnehmen und ausführen. Die Antriebseinheiten können also zumindest hardwareseitig dieselben Steuerbefehle empfangen. Auf Seite der Zentralsteuerung kann hierdurch eine wesentliche Entlastung erzielt werden, so dass die Rechenleistung der Zentralsteuerung deutlich reduziert und die Zentralsteuerung damit deutlich kostengünstiger ausgeführt werden kann und/oder eine schnellere Verarbeitung durchführen kann.

Ebenfalls ist erfindungsgemäß von Vorteil, dass ein Gateway eingespart werden kann, welches den verschiedenen Antriebseinheiten verschiedene Steuerbefehle zukommen lässt. Die Entwicklungskosten für das Gateway und eventuell in dem Gateway enthaltene Bewegungssteuerungen können daher entfallen.

Die Zentralsteuerung kann eine übergeordnete Steuerung sein, wobei insbesondere genau eine Zentralsteuerung vorhanden ist. Die Zentralsteuerung kann mittels der Steuerbefehle vorgeben, wie mit den Transportelementen zu verfahren bzw. wie diese zu bewegen sind. Die Zentralsteuerung erzeugt also die Steuerbefehle, wobei die Steuerbefehle z.B. mittels eines Broadcasts an alle Antriebseinheiten übertragen werden können.

Bei der Zentralsteuerung kann es sich insbesondere um eine speicherprogrammierbare Steuerung (SPS) handeln. An die SPS können die verschiedenen Antriebseinheiten angeschlossen sein (mittels der Datenverbindung).

Eine Antriebseinheit kann beispielsweise einen Linearmotor, aber auch einen rotatorischen Antrieb und dergleichen umfassen. Eine Antriebseinheit umfasst bevorzugt zusätzlich eine Recheneinrichtung zur Datenverarbeitung, in welcher die erhaltenen Steuerbefehle verarbeitet werden.

Als Steuerbefehle werden insbesondere diejenigen zwischen der Zentralsteuerung und den Antriebseinheiten ausgetauschten Daten angesehen, die eine Bewegung der Transportelemente bewirken sollen. Von den Antriebseinheiten an die Zentralsteuerung zurückgesendete Daten, wie z.B. Statusinformationen, das heißt z.B. momentane Positionsinformationen und/oder momentane Geschwindigkeitsinformationen über die Transportelemente, werden bevorzugt nicht als Steuerbefehle angesehen.

Vorteilhafte Weiterbildungen der Erfindung sind der Beschreibung, der Figur sowie den Unteransprüchen zu entnehmen.

Erfindungsgemäß umfassen die Steuerbefehle Befehle zur Bewegung von zumindest zwei Transportelementen. Weiter erfindungsgemäß verarbeiten die Antriebseinheiten die Steuerbefehle in Abhängigkeit einer Position der Transportelemente. Dies bedeutet, dass die Antriebseinheiten je nachdem, wo sich die Transportelemente befinden, unterschiedliche Befehle aus den Steuerbefehlen verarbeiten. Wenn sich beispielsweise das Transportelement #1 im Bereich einer ersten Antriebseinheit befindet, sodass die erste Antriebseinheit das Transportelement #1 bewegen kann, so kann die erste Antriebseinheit die Steuerbefehle ausführen, die das Transportelement #1 betreffen. Ist hingegen das Transportsystem #3 in der Nähe der ersten Antriebseinheit und kann damit von der ersten Antriebseinheit bewegt werden, so kann die erste Antriebseinheit stattdessen, insbesondere nur, die Steuerbefehle ausführen, die das Transportelement #3 betreffen.

In diesem Zusammenhang sei erwähnt, dass die Steuerbefehle der Zentralsteuerung bevorzugt angeben, wie sich ein jeweiliges Transportelement bewegen soll und nicht angeben, wie sich eine jeweilige Antriebseinheit verhalten soll. Die Antriebseinheiten bestimmen bevorzugt selbstständig, wie die von der Zentralsteuerung vorgegebene Bewegung der Transportelemente umzusetzen ist.

Erfindungsgemäß umfassen zumindest zwei der Antriebseinheiten einen Filter, welcher aus den Steuerbefehlen, insbesondere nur, die für die jeweilige Antriebseinheit relevanten Befehle herausfiltert, wobei die relevanten Befehle erfindungsgemäß diejenigen Transportelemente betreffen, die momentan mit der jeweiligen Antriebseinheit bewegt werden können. Der Filter kann insbesondere durch die oben genannte Recheneinrichtung der jeweiligen Antriebseinheit verwirklicht werden. Dabei werden durch den Filter dann nur diejenigen Befehle durchgelassen bzw. zur Verarbeitung vorgesehen, die für Transportelemente gelten, welche sich gerade im Bereich der jeweiligen Antriebseinheit befinden. Bei den Befehlen bzw. Steuerbefehlen kann es sich insbesondere um Angaben zur Soll-Position, Soll-Geschwindigkeit, Soll-Beschleunigung etc. eines jeweiligen Transportelements handeln.

Der Ausdruck Filter kann bevorzugt dahingehend verstanden werden, dass es nur darauf ankommt, dass der Filter auf irgendeine Art und Weise kennzeichnet, welche Befehle für die jeweilige Antriebseinheit relevant sind.

Der Filter kann bevorzugt in einer speziell hierfür vorgesehenen Hardware implementiert werden, wobei z.B. die im Bereich der jeweiligen Antriebseinheit befindlichen Transportelemente in einer Speichertabelle der vorgesehenen Hardware gespeichert sind. Eine solche hardwarenahe Implementierung des Filters ermöglicht es, die Recheneinrichtung der Antriebseinheit (die z.B. eine Steuersoftware ausführt) nicht zu belasten. Insbesondere erhält z.B. die Steuersoftware nie Kenntnis von Steuerbefehlen, die nicht im Bereich der jeweiligen Antriebseinheit befindliche Transportelemente betreffen.

Die Transportelemente können bevorzugt mittels der Antriebseinheiten einzeln, separat voneinander und/oder unabhängig voneinander bewegt werden.

Gemäß einer weiteren vorteilhaften Ausführungsform sind die Antriebseinheiten eingerichtet, eine Änderung des Filters zu veranlassen, wenn ein Transportelement nicht mehr mittels der jeweiligen Antriebseinheit bewegbar ist und/oder wenn ein Transportelement mittels der Antriebseinheit bewegbar wird. Anders ausgedrückt dienen die Transportelemente und/oder deren Bewegung als Trigger für die Änderung des Filters. Wenn also beispielsweise ein Transportelement den Bereich einer ersten Antriebseinheit verlässt und in den Bereich einer zweiten Antriebseinheit eintritt, dann können zu diesem Zeitpunkt der Filter der ersten Antriebseinheit und der Filter der zweiten Antriebseinheit geändert werden, insbesondere durch eine Anpassung der oben erwähnten Speichertabellen. Der Filter der ersten Antriebseinheit berücksichtigt dann nicht mehr Steuerbefehle für das Transportelement, wohingegen der Filter der zweiten Antriebseinheit dann Steuerbefehle für das Transportelement berücksichtigt, d.h. zur Verarbeitung durchlässt.

Anders gesagt, können durch die Filter "virtuelle" Datenpfade zwischen der Zentralsteuerung und den Transportelementen geschaffen werden. Die oben genannten Filter und deren Änderung können dann eine dynamische Neu-Zuordnung der Datenpfade zu den einzelnen Antriebseinheiten bewirken, ohne dass hierfür eine Aktion der Zentralsteuerung erforderlich ist oder eine Verarbeitungspause des Transportsystems notwendig wird. Auf diese Weise kann eine Belastung der Zentralsteuerung vermieden werden, wobei trotzdem ein flexibles und schnell reaktionsfähiges Transportsystem geschaffen wird.

Für die korrekte Änderung bzw. Anpassung der Filter können die Positionen der Transportelemente ermittelt werden, beispielsweise über Encoder (z.B. optisch oder magnetisch) oder mittels Hall-Sensoren.

Gemäß einer weiteren vorteilhaften Ausführungsform sind die Antriebseinheiten eingerichtet, Statusinformationen über die Transportelemente an die Zentralsteuerung zurückzusenden. Bevorzugt werden die Statusinformationen von zumindest zwei Antriebseinheiten und/oder von zumindest zwei Transportelementen in einem Datagramm kombiniert. Unter einem Datagramm ist beispielsweise der nachstehend erwähnte Ethernet-Frame zu verstehen.

Die Antriebseinheiten können also Statusinformationen an die Zentralsteuerung zurücksenden. Dabei können z.B. zumindest zwei, bevorzugt alle, Antriebseinheiten Statusinformationen mit demselben Datagramm an die Zentralsteuerung übermitteln. Alternativ oder zusätzlich können mit demselben Datagramm Statusinformationen von zumindest zwei, bevorzugt von allen, Transportelementen an die Zentralsteuerung übermittelt werden.

Das Datagramm, welches die Statusinformationen überträgt, wird bevorzugt von der Zentralsteuerung selbst erzeugt, dann nacheinander an die einzelnen Antriebseinheiten übermittelt und von den einzelnen Antriebseinheiten bearbeitet (z.B. dort zumindest hardwareseitig empfangen). Die jeweilige Antriebseinheit fügt dann, sofern notwendig, ihre Statusinformationen in das Datagramm ein. Danach wird das Datagramm zur nächsten Antriebseinheit weitergeleitet. Schließlich gelangt das Datagramm dann wieder zur Zentralsteuerung, die auf diese Weise sämtliche Statusinformationen in einem einzigen Datagramm empfangen kann. Durch die Verwendung eines einzigen Datagramms kann die Belastung der Datenverbindung stark reduziert werden. Auch die Verarbeitung der Statusinformationen in der Zentralsteuerung wird deutlich vereinfacht. Die Übertragung der Statusinformationen an die Zentralsteuerung erfolgt bevorzugt wiederholt, z.B. zyklisch.

Das Datagramm zur Übermittlung der Statusinformationen umfasst bevorzugt keine Steuerbefehle, d.h. das Datagramm zur Übermittlung der Statusinformationen ist separat zur Übertragung der Steuerbefehle.

Gemäß einer weiteren vorteilhaften Ausführungsform sind die jeweiligen Antriebseinheiten ausgebildet, nur Statusinformationen über ein Transportelement zu dem Datagramm hinzuzufügen, wenn das Transportelement momentan mit der jeweiligen Antriebseinheit bewegt werden kann, wobei die Statusinformationen für ein jeweiliges Transportelement bevorzugt an einer vorbestimmten Position in dem Datagramm hinterlegt werden.

Anders ausgedrückt werden die Statusinformationen über ein Transportelement nur dann von der Antriebseinheit in das Datagramm eingefügt, wenn sich das jeweilige Transportelement in dem Bereich der Antriebseinheit befindet.

Die Antriebseinheiten verarbeiten bevorzugt Steuerbefehle nur dann, wenn sich ein jeweiliges Transportelement in dem Bereich der Antriebseinheit befindet. Dasselbe gilt für den Rückkanal, d.h. die Übermittlung von Statusinformationen an die Zentralsteuerung. Der vorstehend erläuterte Filter kann somit ausgebildet sein, in zwei Richtungen zu wirken. Zum einen werden durch den Filter nur die relevanten Steuerbefehle "durchgelassen". Zum anderen kann der Filter sicherstellen, dass nur Statusinformationen zu Transportelementen, welche durch die jeweilige Antriebseinheit bewegt werden können, von der jeweiligen Antriebseinheit in das Datagramm geschrieben werden können.

Durch die vorbestimmte Position können die Statusinformationen für ein jeweiliges Transportelement an einer dafür vorbestimmten Position (z.B. in einem vorbestimmten Bereich) in das Datagramm eingetragen werden. Hierdurch werden die Interpretation der Statusinformationen und die Zuordnung der Statusinformationen zu einem jeweiligen Transportelement in der Zentralsteuerung vereinfacht. Gemäß einer weiteren vorteilhaften Ausführungsform besteht zwischen zumindest zwei der Antriebseinheiten eine Kommunikationsverbindung, mittels welcher sich die Antriebseinheiten bevorzugt über Bewegungen der Transportelemente informieren und/oder austauschen. Insbesondere können sich benachbarte Antriebseinheiten darüber informieren, dass ein Transportelement den Bereich der einen Antriebseinheit verlassen hat und damit in den Bereich der anderen Antriebseinheit übergegangen ist. Mittels der Kommunikationsverbindung kann dadurch eine synchrone Umschaltung bzw. Änderung der Filter der Antriebseinheiten vorgenommen werden. Hierdurch wird es vermieden, dass ein Steuerbefehl (bei einer nicht synchronen Umschaltung) fälschlicherweise von zwei Antriebseinheiten oder von gar keiner Antriebseinheit verarbeitet wird. Die Kommunikationsverbindung ist bevorzugt physikalisch separat von der Datenverbindung ausgebildet. Zudem kann die Kommunikationsverbindung eine schnellere Datenübertragung zwischen zwei Antriebseinheiten gestatten als die Datenverbindung.

Gemäß einer weiteren vorteilhaften Ausführungsform basiert die Datenverbindung auf einer Feldbusverbindung. Die Feldbusverbindung kann bevorzugt eine Echtzeitverbindung schaffen, beispielsweise durch die Verwendung von Industrial Ethernet. Die Datenverbindung und/oder der Feldbus können also jeweils auf der Ethernet-Technologie aufsetzen, wobei die Steuerbefehle bevorzugt in Ethernet-Frames übertragen werden. Die Steuerbefehle für die Antriebseinheiten können bevorzugt in einem einzigen bzw. gemeinsamen Ethernet-Frame übertragen werden.

Insbesondere kann es sich bei der Feldbusverbindung um einen EtherCAT-Feldbus, einen ProfiNET-Feldbus, einen Ethernet/IP-Feldbus und dergleichen handeln. Auch die Kommunikationsverbindung zwischen den Antriebseinheiten kann von einem Feldbus gebildet werden. Auch die Kommunikationsverbindung kann eine Echtzeitkommunikation gewährleisten.

Die Datenverbindung und insbesondere die Feldbusverbindung kann jeweils die Zentralsteuerung mit mehreren und bevorzugt allen Antriebseinheiten verbinden. Es wird also dieselbe Datenverbindung oder dieselbe Feldbusverbindung für die bzw. alle Antriebseinheiten verwendet. Auf diese Weise erhalten die Antriebseinheiten automatisch dieselben Steuerbefehle.

Gemäß einer weiteren vorteilhaften Ausführungsform basiert die Datenverbindung auf dem Sercos-III-Feldbus, wobei der Filter in den Antriebseinheiten einen Sercos Descriptor Table umfasst, welcher eine Zuordnung von in den Steuerbefehlen enthaltenen Befehlen zu im Bereich der jeweiligen Antriebseinheit befindlichen Transportelementen vornimmt. Der Sercos Descriptor Table kann also die Funktion des oben beschriebenen Filters verwirklichen. Der Sercos Descriptor Table (d.h. der Filter) kann die Steuerbefehle aus einem Ethernet-Frame entnehmen und die Daten aus dem Ethernet-Frame den im Bereich der Antriebseinheit befindlichen Transportelementen zuordnen. Steuerbefehle in dem Ethernet-Frame, welche nicht im Bereich der Antriebseinheit befindliche Transportelemente betreffen, können von dem Filter ausgeblendet werden. In entsprechender Weise kann der Sercos Descriptor Table sicherstellen, dass nur Statusinformationen von im Bereich der Antriebseinheit befindlichen Transportelementen an die Zentralsteuerung übertragen werden, wobei zugleich sichergestellt werden kann, dass die Statusinformationen an der korrekten vorbestimmten Position in dem Ethernet-Frame (d.h. in dem Datagramm) übertragen werden.

Gemäß einer weiteren vorteilhaften Ausführungsform umfassen zumindest zwei der Antriebseinheiten jeweils mehrere, insbesondere kaskadierte, Regler. Kaskadiert bedeutet dabei, dass der jeweilige Regler bevorzugt einen Lageregler, einen Geschwindigkeitsregler und/oder einen Stromregler umfasst. Jeweils einer der Regler führt bevorzugt jeweils eine Regelung für, insbesondere genau, für eines der Transportelemente durch. Die Regler können mittels einer Software in der Recheneinrichtung realisiert sein. Dies bedeutet, die Anzahl der Regler kann der Anzahl der maximal gleichzeitig mittels der jeweiligen Antriebseinheit bewegbaren Transportelemente entsprechen. Insbesondere können die Antriebseinheiten jeweils drei oder sechs Regler umfassen. Die Regler können jeweils identisch aufgebaut sein, wodurch sie einfach zu implementieren sind.

Gemäß einer weiteren vorteilhaften Ausführungsform gibt die Zentralsteuerung für zumindest zwei der Transportelemente ein Bewegungsprofil vor. Das Bewegungsprofil wird bevorzugt von der Zentralsteuerung mittels der Datenverbindung an die Antriebseinheiten übertragen. Das Bewegungsprofil kann z.B. durch nacheinander (z.B. in verschiedenen Ethernet-Frames) übertragene Geschwindigkeitswerte oder durch nacheinander übertragene Positionswerte erzeugt werden. Insbesondere durch die Verwendung einer Echtzeit-Verbindung wird hierbei eine genaue und präzise Bewegung der Transportelemente ermöglicht.

Gemäß einer weiteren vorteilhaften Ausführungsform sind die Antriebseinheiten mittels der Datenverbindung direkt mit der Zentralsteuerung verbunden. Dies bedeutet, zwischen der Zentralsteuerung und den Antriebseinheiten ist keine Datenverarbeitungseinrichtung vorgesehen, welche die Steuerbefehle verändert, aufteilt und/oder umwandelt. Auf diese Weise kann ein Gateway zwischen den Antriebseinheiten und der Zentralsteuerung eingespart werden.

Gemäß einer weiteren vorteilhaften Ausführungsform ist das Transportsystem ein Multi-Carrier-System, welches mehrere unabhängig voneinander bewegbare Transportelemente umfasst, wobei die Transportelemente auf einer Führungsbahn geführt werden und mittels der Antriebseinheiten entlang der Führungsbahn bewegt werden, wobei die Transportelemente bevorzugt von einer Antriebseinheit zur nächsten bewegt werden. Die Antriebseinheiten sind bevorzugt entlang einer, insbesondere zusammenhängenden, Führungsbahn angeordnet. Die Führungsbahn kann eine mechanische Führung für die Transportelemente umfassen. Beispielsweise können die Transportelemente Rollen aufweisen, die in Vertiefungen der Führungsbahn laufen. Insbesondere ist die Führungsbahn des Transportsystems in sich geschlossen, so dass die Transportelemente entlang einer geschlossenen Bahn (d.h. "im Kreis") bewegt werden können.

Gemäß einer weiteren vorteilhaften Ausführungsform umfassen die Antriebseinheiten Linearmotoren. Dies bedeutet, die Antriebseinheiten können eine Vielzahl von Spulen umfassen (z.B. neun bis einundzwanzig, insbesondere achtzehn), die ein wanderndes magnetisches Feld erzeugen. In entsprechender Weise können die Transportelemente Permanentmagneten umfassen, wobei das wandernde magnetische Feld der Spulen eine Kraft auf die Permanentmagnete der Transportelemente bewirkt, so dass die Transportelemente entlang der Führungsbahn bewegt werden. Im Falle eines Multi-Carrier-Systems kann es sich bei den Transportelementen um die sogenannten Mover handeln, welche die genannten Permanentmagneten aufweisen.

Die Antriebseinheiten sind bevorzugt in sich abgeschlossene Einheiten, welche die genannten Spulen, die Recheneinrichtung und/oder eine entsprechende Leistungselektronik zur Ansteuerung der Spulen aufweisen. Die Antriebseinheiten sind weiter bevorzugt ausgebildet, baukastenartig aneinandergereiht zu werden, um eine Transportstrecke für die Transportelemente zu bilden. Die Transportelemente können dann entlang der Transportstrecke bewegt werden.

Die Antriebseinheiten können zudem jeweils Stücke der Führungsbahn umfassen, sodass beim Zusammenfügen von mehreren Antriebseinheiten die Stücke der Führungsbahn gemeinsam die Führungsbahn bilden. Beispielsweise kann eine Antriebseinheit ein Stück der Führungsbahn mit etwa 30 bis 50 cm Länge umfassen.

Als Anschlüsse für die Antriebseinheiten können, insbesondere nur, eine Energieversorgung, ein Ethernet-Anschluss für die Datenverbindung und/oder ein Anschluss für die Kommunikationsverbindung vorhanden sein. Dementsprechend können die Zentralsteuerung und die Antriebseinheiten räumlich voneinander beabstandet oder getrennt angeordnet sein. Dies gilt auch für die Antriebseinheiten untereinander.

Es versteht sich, dass das erfindungsgemäße Transportsystem nicht auf ein Multi-Carrier-System beschränkt ist. Stattdessen ist es ebenfalls möglich, das Transportsystem anders auszubilden, z.B. mit Antriebseinheiten, die als Förderbänder ausgebildet sind, wobei dann als Transportelemente beispielsweise Werkstücke oder auf dem Förderband transportierte Behältnisse angesehen werden. Das jeweilige Förderband wird insbesondere dann bewegt (in Reaktion auf die entsprechenden Steuerbefehle), wenn das jeweilige Werkstück auf dem jeweiligen Förderband liegt.

Weiterer Gegenstand der Erfindung ist ein Verfahren zur Steuerung eines Transportsystems gemäß Anspruch 13.

Für das erfindungsgemäße Verfahren gelten die obigen Aussagen zum erfindungsgemäßen Transportsystem entsprechend. Dies gilt insbesondere für Vorteile und bevorzugte Ausführungsformen.

Nachfolgend wird die Erfindung rein beispielhaft unter Bezugnahme auf die Zeichnung beschrieben. Es zeigt:

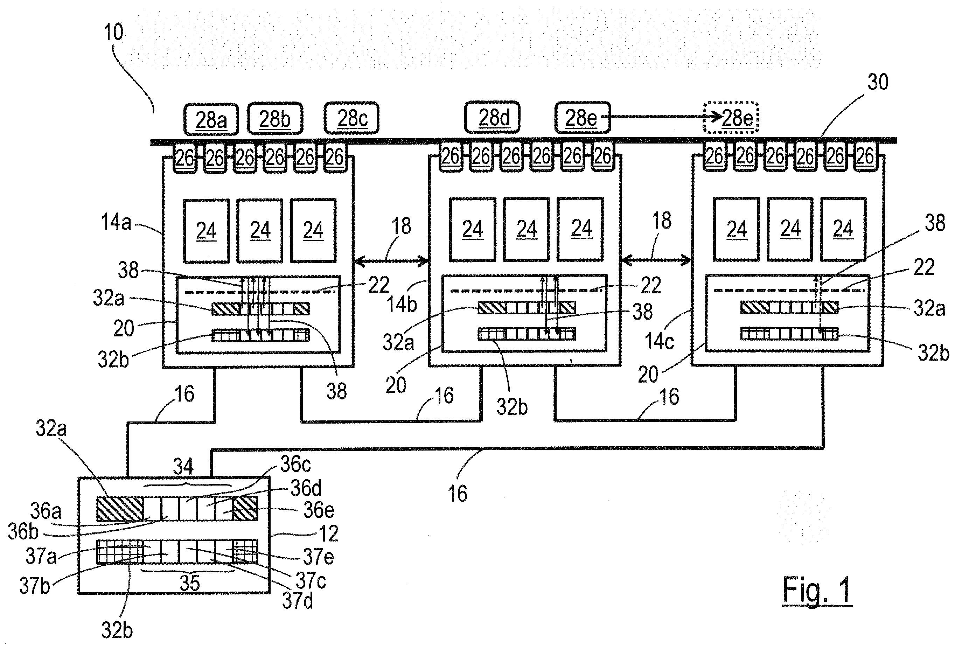

- Fig. 1: schematisch ein Multi-Carrier-System.

Fig. 1 zeigt ein Multi-Carrier-System 10 in schematischer Ansicht. Das Multi-Carrier-System 10 umfasst eine Zentralsteuerung 12 und zumindest drei Antriebseinheiten 14a, 14b, 14c.

Die Zentralsteuerung 12 ist mit den Antriebseinheiten 14 mittels eines Sercos-III-Feldbusses 16 in einer Ringverbindung gekoppelt. Zusätzlich zu dem Sercos-III-Feldbus 16 sind die Antriebseinheiten 14 jeweils mit benachbarten Antriebseinheiten 14 mittels einer Kommunikationsverbindung 18 verbunden. Die Kommunikationsverbindung 18 ist ausgebildet, Daten zwischen zwei Antriebseinheiten 14 schneller zu übertragen als es mittels des Sercos-III-Feldbusses 16 möglich ist. Beispielsweise kann die Kommunikationsverbindung 18 125 µs benötigen, wohingegen der Sercos-III-Feldbus 16 1 ms benötigen kann.

Der Sercos-III-Feldbus 16 ist derart ausgebildet, dass jede Antriebseinheit 14 sämtliche über den Sercos-III-Feldbus 16 übertragenen Echtzeit-Daten empfängt und an die weiteren Antriebseinheiten 14 weiterleitet.

In jeder Antriebseinheit 14a, 14b, 14c ist ein jeweiliger Segment-Controller 20 angeordnet. Jeder Segment-Controller 20 weist einen Filter 22 in Form eines Sercos Descriptor Table auf.

Die Antriebseinheiten 14 umfassen zudem jeweils drei Regler 24, welche über (nicht gezeigte) Leistungsstufen Feldspulen 26 der Antriebseinheiten 14 ansteuern. Die Regler 24 wiederum werden von dem jeweiligen Segment-Controller 20 angesteuert.

Durch die Feldspulen 26 wird ein veränderliches und/oder wanderndes Magnetfeld erzeugt, mittels welchem sogenannte Mover 28 (d.h. Transportelemente) auf einer Führungsbahn 30 bewegt werden können. Die Mover 28 umfassen hierzu (nicht gezeigte) Permanentmagnete.

Fig. 1 zeigt insgesamt fünf Mover 28, wobei ein erster Mover 28a, ein zweiter Mover 28b und ein dritter Mover 28c im Bereich der ersten Antriebseinheit 14a angeordnet sind. Ein vierter Mover 28d und ein fünfter Mover 28e befinden sich hingegen im Bereich der zweiten Antriebseinheit 14b.

Im Betrieb sendet die Zentralsteuerung 12 nun zyklisch Ethernet-Frames 32a, 32b über den Sercos-III-Feldbus 16. Die Ethernet-Frames 32a, 32b umfassen dabei entweder Steuerbefehle 34 oder Statusinformationen 35.

Die Steuerbefehle 34 sind innerhalb des Ethernet-Frames 32a in - hierbei beispielhaft - fünf Steuerbefehl-Abschnitte 36a, 36b, 36c, 36d, 36e aufgeteilt. Jeder Steuerbefehl-Abschnitt 36 ist dabei einem jeweiligen Mover 28 zugeordnet und enthält Steuerbefehle für den jeweiligen Mover. Beispielsweise enthält ein erster Steuerbefehl-Abschnitt 36a Steuerbefehle für den ersten Mover 28a.

In entsprechender Weise sind innerhalb eines anderen Ethernet-Frames 32b z.B. fünf vorbestimmte Statusinformations-Abschnitte 37a, 37b, 37c, 37d, 37e angeordnet. Auch hier ist jedem Statusinformations-Abschnitt 37 ein jeweiliger Mover 28 zugeordnet, wobei z.B. der erste Statusinformations-Abschnitt 37a mit Statusinformationen über den ersten Mover 28a gefüllt werden soll.

Den Antriebseinheiten 14 ist nun bekannt (z.B. durch Ermittlung mittels eines nicht gezeigten Encoders), welche Mover 28 sich im Bereich der jeweiligen Antriebseinheit 14 befinden. Die Segment-Controller 20 der Antriebseinheiten 14 passen dementsprechend ihre Filter 22 an.

Im Betrieb wird nun von allen Antriebseinheiten 14 (genauer gesagt von dem jeweiligen Segment-Controller 20) ein Ethernet-Frame 32a mit denselben Steuerbefehlen 34 empfangen. Es ist zu verstehen, dass nur die Steuerbefehle 34 jeweils identisch empfangen werden. Weitere in dem Ethernet-Frame 32a enthaltene Daten können hingegen von den Antriebseinheiten 14 verändert werden.

In der ersten Antriebseinheit 14a ist nun der Filter 22 derart eingestellt, dass die für die drei im Bereich der ersten Antriebseinheit 14a befindlichen Mover 28a, 28b, 28c relevanten Steuerbefehl-Abschnitte 36a, 36b, 36c verarbeitet werden, was durch Verarbeitungs-Pfeile 38 in der Fig. 1 angedeutet ist. Durch die Verarbeitung wird bewirkt, dass die Regler 24 in der ersten Antriebseinheit 14a z.B. eine Bewegung der Mover 28a, 28b, 28c vornehmen. Die übrigen Steuerbefehl-Abschnitte 36d, 36e werden von der ersten Antriebseinheit 14a nicht berücksichtigt.

In entsprechender Weise werden von dem Filter 22 der zweiten Antriebseinheit 14b nur die Steuerbefehl-Abschnitte 36d und 36e zur Verarbeitung weitergeleitet, da diese zu den im Bereich der zweiten Antriebseinheit 14b befindlichen Mover 28d, 28e gehören.

Im Bereich der dritten Steuereinheit 14c befinden sich zunächst keine Mover 28, so dass der dortige Filter 22 zunächst keine Verarbeitung von Steuerbefehl-Abschnitten 36 veranlasst.

Wird nun der fünfte Mover 28e von der zweiten Antriebseinheit 14b in den Bereich der dritten Antriebseinheit 14c bewegt, so teilt dies die zweite Antriebseinheit 14b der dritten Antriebseinheit 14c mittels der Kommunikationsverbindung 18 mit. Daraufhin werden die Filter 22 der zweiten und dritten Antriebseinheit 14b, 14c geändert. In dem Filter 22 der zweiten Antriebseinheit wird die Ausführung von Steuerbefehlen für den fünften Mover 28e blockiert, wohingegen die Ausführung von Steuerbefehlen für den Mover 28e in der dritten Antriebseinheit 14c zur Verarbeitung freigegeben wird.

Sendet die Zentralsteuerung 12 nun in den Steuerbefehlen 34 einen weiteren Befehl zur Bewegung des fünften Movers 28e (in dem fünften Steuerbefehl-Abschnitt 36e), so wird dieser Befehl automatisch von der dritten Antriebseinheit 14c verarbeitet, ohne dass die Zentralsteuerung 12 damit belastet würde, eine Kommunikation bzw. einen Datenpfad zu der jeweiligen Antriebseinheit 14 aufzubauen oder zu initialisieren. Auf diese Weise wird die Steuerung des Multi-Carrier-Systems 10 auf einfache Weise möglich und gestattet dadurch einen flexiblen Einsatz des Multi-Carrier-Systems 10.

Die Rücksendung von Statusinformationen 35 von den Antriebseinheiten 14 an die Zentralsteuerung 12 erfolgt auf ähnliche Art und Weise.

Zunächst wird das Ethernet-Frame 32b zur Übermittlung der Statusinformationen von der ersten Antriebseinheit 14a empfangen. Bei dem Ethernet-Frame 32b zur Übermittlung der Statusinformationen handelt es sich bei Verwendung des Sercos-III-Feldbusses 16 um ein anderes Ethernet-Frame 32 als das Ethernet-Frame 32a, welches die Steuerbefehle 34 übermittelt.

Bei der ersten Antriebseinheit 14a ist der Filter 22 derart eingestellt, dass die Statusinformations-Abschnitte 37a, 37b, 37c für die drei im Bereich der ersten Antriebseinheit 14a befindlichen Mover 28a, 28b, 28c von der ersten Antriebseinheit 14a "befüllt" (d.h. beschrieben) werden können, was ebenfalls durch die Verarbeitungs-Pfeile 38 angedeutet ist.

In entsprechender Weise werden von der zweiten und dritten Antriebseinheit 14b, 14c die übrigen Statusinformations-Abschnitte 37d, 37e beschrieben. Abschließend empfängt die Zentralsteuerung 12 das Ethernet-Frame 32b wieder und erhält so die vollständigen Statusinformationen 35, die ohne die Notwendigkeit einer hohen Übertragungsbandbreite des Feldbusses 16 ermittelt wurden.

### Bezugszeichenliste

- 10: Multi-Carrier-System
- 12: Zentralsteuerung
- 14a - 14c: Antriebseinheiten
- 16: Sercos-III-Feldbus
- 18: Kommunikationsverbindung
- 20: Segment-Controller
- 22: Filter
- 24: Regler
- 26: Feldspule
- 28a - 28e: Mover
- 30: Führungsbahn
- 32a, 32b: Ethernet-Frame
- 34: Steuerbefehl
- 35: Statusinformationen
- 36a - 36e: Steuerbefehl-Abschnitt
- 37a - 37e: Statusinformations-Abschnitt
- 38: Verarbeitung

## Patentansprüche

1. Transportsystem (10), insbesondere Multi-Carrier-System, mit
- einer Zentralsteuerung (12),
- mehreren Antriebseinheiten (14a-14c), wobei die Antriebseinheiten (14a-14c) mittels einer Datenverbindung (16) mit der Zentralsteuerung (12) gekoppelt sind, und
- mehreren Transportelementen (28a-28e), welche mittels der Antriebseinheiten (14a-14c) bewegbar sind,
wobei die Zentralsteuerung (12) ausgebildet ist, Steuerbefehle (34) an die Antriebseinheiten (14a-14c) zu übermitteln, wobei die Steuerbefehle (34) die Antriebseinheiten (14a-14c) zu einer Bewegung der Transportelemente (28a-28e) in Abhängigkeit der Steuerbefehle (34) veranlassen, wobei die Steuerbefehle (34) Befehle zur Bewegung von zumindest zwei Transportelementen (28a-28e) umfassen, wobei die Antriebseinheiten (14a-14c) ausgebildet sind, die Steuerbefehle (34) in Abhängigkeit einer Position der Transportelemente (28a-28e) zu verarbeiten, **dadurch gekennzeichnet, dass** zumindest zwei der Antriebseinheiten (14a-14c), bevorzugt alle Antriebseinheiten (14a-14c), dieselben Steuerbefehle (34) erhalten und die zumindest zwei der Antriebseinheiten (14a-14c) einen Filter (22) umfassen, welcher ausgebildet ist, aus den Steuerbefehlen (34) die für die jeweilige Antriebseinheit (14a-14c) relevanten Befehle herauszufiltern, wobei die relevanten Befehle diejenigen Transportelemente (28a-28e) betreffen, die momentan mit der jeweiligen Antriebseinheit (14a-14c) bewegt werden können.

2. Transportsystem (10) nach Anspruch 1,
**dadurch gekennzeichnet, dass**
die Antriebseinheiten (14a-14c) eingerichtet sind, eine Änderung des Filters (22) zu veranlassen, wenn ein Transportelement (28a-28e) nicht mehr mittels der jeweiligen Antriebseinheit (14a-14c) bewegbar ist und/oder wenn ein Transportelement (28a-28e) mittels der Antriebseinheit (14a-14c) bewegbar wird.

3. Transportsystem (10) nach zumindest einem der vorstehenden Ansprüche,
**dadurch gekennzeichnet, dass**
die Antriebseinheiten (14a-14c) eingerichtet sind, Statusinformationen (35) über die Transportelemente (28a-28e) an die Zentralsteuerung (12) zurückzusenden, wobei die Statusinformationen (35) von zumindest zwei Antriebseinheiten (14a-14c) und/oder von zumindest zwei Transportelementen (28a-28e) in einem Datagramm (32b) kombiniert werden.

4. Transportsystem (10) nach Anspruch 3,
**dadurch gekennzeichnet, dass**
eine jeweilige Antriebseinheit (14a-14c) ausgebildet ist, nur Statusinformationen (35) über ein Transportelement (28a-28e) zu dem Datagramm (32b) hinzuzufügen, wenn das Transportelement (28a-28e) momentan mit der jeweiligen Antriebseinheit (14a-14c) bewegt werden kann, wobei die Statusinformationen (35) für ein jeweiliges Transportelement (28a-28e) bevorzugt an einer vorbestimmten Position (37a-37e) in dem Datagramm (32b) hinterlegt werden.

5. Transportsystem (10) nach zumindest einem der vorstehenden Ansprüche,
**dadurch gekennzeichnet, dass**
zwischen zumindest zwei der Antriebseinheiten (14a-14c) eine Kommunikationsverbindung (18) besteht, mittels welcher sich die Antriebseinheiten (14a-14c) bevorzugt über Bewegungen der Transportelemente (28a-28e) informieren.

6. Transportsystem (10) nach zumindest einem der vorstehenden Ansprüche,
**dadurch gekennzeichnet, dass**
die Datenverbindung (16) auf einer Feldbusverbindung, bevorzugt auf einer Echtzeitverbindung basiert.

7. Transportsystem (10) nach zumindest einem der vorstehenden Ansprüche,
**dadurch gekennzeichnet, dass**
die Datenverbindung (16) auf dem Sercos III-Feldbus basiert, wobei der Filter (22) in den Antriebseinheiten (14a-14c) einen Sercos Descriptor Table umfasst, welcher eine Zuordnung von in den Steuerbefehlen (34) enthaltenen Befehlen zu im Bereich der jeweiligen Antriebseinheit (14a-14c) befindlichen Transportelementen (28a-28e) vornimmt.

8. Transportsystem (10) nach zumindest einem der vorstehenden Ansprüche,
**dadurch gekennzeichnet, dass**
zumindest zwei der Antriebseinheiten (14a-14c) jeweils mehrere, insbesondere kaskadierte, Regler (24) umfassen, wobei jeweils einer der Regler (24) ausgebildet ist, eine Regelung für eines der Transportelemente (28a-28e) durchzuführen

9. Transportsystem (10) nach zumindest einem der vorstehenden Ansprüche,
**dadurch gekennzeichnet, dass**
die Zentralsteuerung (12) ausgebildet ist, für zumindest zwei der Transportelemente (28a-28e) ein Bewegungsprofil vorzugeben und mittels der Datenverbindung (16) an die Antriebseinheiten (14a-14c) zu übertragen.

10. Transportsystem (10) nach zumindest einem der vorstehenden Ansprüche,
**dadurch gekennzeichnet, dass**
die Antriebseinheiten (14a-14c) mittels der Datenverbindung (16) direkt mit der Zentralsteuerung (12) verbunden sind.

11. Transportsystem (10) nach zumindest einem der vorstehenden Ansprüche,
**dadurch gekennzeichnet, dass**
das Transportsystem (10) ein Multi-Carrier-System ist, welches mehrere unabhängig voneinander bewegbare Transportelemente (28a-28e) umfasst, wobei die Transportelemente (28a-28e) auf einer Führungsbahn geführt werden und mittels der Antriebseinheiten (14a-14c) entlang der Führungsbahn bewegt werden, wobei die Transportelemente (28a-28e) bevorzugt von einer Antriebseinheit (14a-14c) zur nächsten bewegt werden.

12. Transportsystem (10) nach zumindest einem der vorstehenden Ansprüche,
**dadurch gekennzeichnet, dass**
die Antriebseinheiten (14a-14c) Linearmotoren umfassen.

13. Verfahren zur Steuerung eines Transportsystems (10), insbesondere Multi-Carrier-System, wobei das Transportsystem (10) eine Zentralsteuerung (12), mehrere Antriebseinheiten (14a-14c), wobei die Antriebseinheiten (14a-14c) mittels einer Datenverbindung (16) mit der Zentralsteuerung (12) gekoppelt sind, und mehrere Transportelemente (28a-28e) umfasst, wobei die Transportelemente (28a-28e) mittels der Antriebseinheiten (14a-14c) bewegt werden,
wobei die Zentralsteuerung (12) Steuerbefehle (34) an die Antriebseinheiten (14a-14c) übermittelt, wobei die Steuerbefehle (34) die Antriebseinheiten (14a-14c) zu einer Bewegung der Transportelemente (28a-28e) in Abhängigkeit der Steuerbefehle (34) veranlassen,
wobei die Steuerbefehle (34) Befehle zur Bewegung von zumindest zwei Transportelementen (28a-28e) umfassen, wobei die Antriebseinheiten (14a-14c) die Steuerbefehle (34) in Abhängigkeit einer Position der Transportelemente (28a-28e) verarbeiten,
**dadurch gekennzeichnet, dass**
zumindest zwei der Antriebseinheiten (14a-14c), bevorzugt alle Antriebseinheiten (14a-14c), dieselben Steuerbefehle (34) erhalten und
die zumindest zwei der Antriebseinheiten (14a-14c) aus den Steuerbefehlen (34) die für die jeweilige Antriebseinheit (14a-14c) relevanten Befehle herausfiltern, wobei die relevanten Befehle diejenigen Transportelemente (28a-28e) betreffen, die momentan mit der jeweiligen Antriebseinheit (14a-14c) bewegt werden können.

## Claims

1. A transport system (10), in particular a multi-carrier system, comprising
- a central control (12);
- a plurality of drive units (14a-14c), wherein the drive units (14a-14c) are coupled to the central control (12) by means of a data link (16); and
- a plurality of transport elements (28a-28e) which are movable by means of the drive units (14a-14c),
wherein the central control (12) is configured to communicate control commands (34) to the drive units (14a-14c), with the control commands (34) causing the drive units (14a-14c) to make a movement of the transport elements (28a-28e) in dependence on the control commands (34), wherein the control commands (34) comprise commands to move at least two transport elements (28a-28e), with the drive units (14a-14c) being configured to process the control commands (34) in dependence on a position of the transport elements (28a-28e),
**characterized in that**
at least two of the drive units (14a-14c), preferably all the drive units (14a-14c), receive the same control commands (34) and
the at least two of the drive units (14a-14c) comprise a filter (22) which is configured to filter the commands relevant for the respective drive unit (14a-14c) from the control commands (34), with the relevant commands relating to those transport elements (28a-28e) that can currently be moved by the respective drive unit (14a-14c).

2. A transport system (10) in accordance with claim 1,
**characterized in that**
the drive units (14a-14c) are configured to initiate a change of the filter (22) when a transport element (28a-28) is no longer movable by means of the respective drive unit (14a-14c) and/or when a transport element (28a-28d) is movable by means of the drive unit (14a-14c).

3. A transport system (10) in accordance with at least one of the preceding claims,
**characterized in that**
the drive units (14a-14c) are configured to send status information (5) on the transport elements (28a-28e) back to the central control (12), with the status information (35) of at least two drive units (14a-14c) and/or of at least two transport elements (28a-28e) being combined in a datagram (32b).

4. A transport system (10) in accordance with claim 3,
**characterized in that**
a respective drive unit (14a-14c) is configured only to add status information on a transport element (28a-28e) to the datagram (32b) when the transport element (28a-28e) can currently be moved by the respective drive unit (14a-14c), with the status information (35) for a respective transport element (28a-28e) preferably being stored at a predetermined position (37a-37e) in the datagram (32b).

5. A transport system (10) in accordance with at least one of the preceding claims,
**characterized in that**
there is a communication link (18) between at least two of the drive units (14a-14c), by means of which the drive units (14a-14c) are preferably informed of movements of the transport elements (28a-28e).

6. A transport system (10) in accordance with at least one of the preceding claims,
**characterized in that**
the data link (16) is based on a fieldbus connection, preferably on a real time connection.

7. A transport system (10) in accordance with at least one of the preceding claims,
**characterized in that**
the data link (16) is based on the Sercos III fieldbus, with the filter (22) in the drive units (14a-14c) comprising a Sercos descriptor table which carries out an association of commands included in the control commands (34) with transport elements (28a-28e) located in the region of the respective drive unit (14a-14c).

8. A transport system (10) in accordance with at least one of the preceding claims,
**characterized in that**
at least two of the drive units (14a-14c) each comprise a plurality of regulators (24), in particular cascaded regulators (24), with a respective one of the regulators (24) being configured to carry out a regulation for one of the transport elements (28a-28e).

9. A transport system (10) in accordance with at least one of the preceding claims,
**characterized in that**
the central control (12) is configured to specify a movement profile for at least two of the transport elements (28a-28e) and to transmit it to the drive units (14a-14c) by means of the data link (16).

10. A transport system (10) in accordance with at least one of the preceding claims,
**characterized in that**
the drive units (14a-14c) are directly connected to the central control (12) by means of the data link (16).

11. A transport system (10) in accordance with at least one of the preceding claims,
**characterized in that**
the transport system (10) is a multi-carrier system which comprises a plurality of transport elements (28a-28e) movable independently of one another, with the transport elements (28a-28e) being guided on a guide path and being moved along the guide path by means of the drive units (14a-14c), and with the transport elements (28a-28e) preferably being moved from one drive unit (14a-14c) to the next.

12. A transport system (10) in accordance with at least one of the preceding claims,
**characterized in that**
the drive units (14a-14c) comprise linear motors.

13. A method of controlling a transport system (10), in particular a multi-carrier system, wherein the transport system (10) comprises a central control (12); a plurality of drive units (14a-14c), wherein the drive units (14a-14c) are coupled to the central control (12) by means of a data link (16); and a plurality of transport elements (28a-28e), wherein the transport elements (28a-28e) are moved by means of the drive units (14a-14c),
wherein the central control (12) communicates control commands (34) to the drive units (14a-14c), with the control commands (34) causing the drive units (14a-14c) to make a movement of the transport elements (28a-28e) in dependence on the control commands (34),
wherein the control commands (34) comprise commands to move at least two transport elements (28a-28e), with the drive units (14a-14c) being configured to process the control commands (34) in dependence on a position of the transport elements (28a-28e),
**characterized in that**
at least two of the drive units (14a-14c), preferably all the drive units (14a-14c), receive the same control commands (34) and
the at least two of the drive units (14a-14c) filter the commands relevant for the respective drive unit (14a-14c) from the control commands (34), with the relevant commands relating to those transport elements (28a-28e) that can currently be moved by the respective drive unit (14a-14c).

## Revendications

1. Système de transport (10), en particulier système multi-porteurs, comportant
- une commande centrale (12),
- plusieurs unités d'entraînement (14a-14c), les unités d'entraînement (14a-14c) étant couplées à la commande centrale (12) au moyen d'une connexion de données (16), et
- plusieurs éléments de transport (28a-28e) qui sont mobiles au moyen des unités d'entraînement (14a-14c),
la commande centrale (12) étant réalisée pour transmettre des instructions de commande (34) aux unités d'entraînement (14a-14c), les instructions de commande (34) incitant les unités d'entraînement (14a-14c) à déplacer les éléments de transport (28a-28e) en fonction des instructions de commande (34), les instructions de commande (34) incluant des instructions pour déplacer au moins deux éléments de transport (28a-28e), les unités d'entraînement (14a-14c) étant réalisées pour traiter les instructions de commande (34) en fonction d'une position des éléments de transport (28a-28e), **caractérisé en ce que**
au moins deux des unités d'entraînement (14a-14c), de préférence toutes les unités d'entraînement (14a-14c), reçoivent les mêmes instructions de commande (34), et
lesdites au moins deux des unités d'entraînement (14a-14c) comprennent un filtre (22) qui est réalisé pour filtrer, parmi les instructions de commande (34), les instructions pertinentes pour l'unité d'entraînement respective (14a-14c), les instructions pertinentes concernant ceux des éléments de transport (28a-28e) qui peuvent actuellement être déplacés avec l'unité d'entraînement respective (14a-14c).

2. Système de transport (10) selon la revendication 1,
**caractérisé en ce que**
les unités d'entraînement (14a-14c) sont conçues pour provoquer un changement du filtre (22) lorsqu'un élément de transport (28a-28e) n'est plus mobile au moyen de l'unité d'entraînement respective (14a-14c) et/ou lorsqu'un élément de transport (28a-28e) devient mobile au moyen de l'unité d'entraînement (14a-14c).

3. Système de transport (10) selon l'une au moins des revendications précédentes,
**caractérisé en ce que**
les unités d'entraînement (14a-14c) sont conçues pour renvoyer des informations d'état (35), relatives aux éléments de transport (28a-28e), à la commande centrale (12), les informations d'état (35) provenant d'au moins deux unités d'entraînement (14a-14c) et/ou d'au moins deux éléments de transport (28a-28e) étant combinées dans un datagramme (32b).

4. Système de transport (10) selon la revendication 3,
**caractérisé en ce que**
une unité d'entraînement respective (14a-14c) est réalisée pour ajouter au datagramme (32b) uniquement des informations d'état (35) relatives à un élément de transport (28a-28e) lorsque l'élément de transport (28a-28e) peut actuellement être déplacé avec l'unité d'entraînement respective (14a-14c), les informations d'état (35) relatives à un élément de transport respectif (28a-28e) étant de préférence stockées à une position prédéterminée (37a-37e) dans le datagramme (32b).

5. Système de transport (10) selon l'une au moins des revendications précédentes,
**caractérisé en ce que**
il existe une connexion de communication (18) entre au moins deux des unités d'entraînement (14a-14c), au moyen de laquelle les unités d'entraînement (14a-14c) s'informent de préférence des mouvements des éléments de transport (28a-28e).

6. Système de transport (10) selon l'une au moins des revendications précédentes,
**caractérisé en ce que**
la connexion de données (16) est basée sur une connexion de bus de terrain, de préférence sur une connexion en temps réel.

7. Système de transport (10) selon l'une au moins des revendications précédentes,
**caractérisé en ce que**
la connexion de données (16) est basée sur le bus de terrain Sercos III, le filtre (22) dans les unités d'entraînement (14a-14c) comprenant une table de descripteurs Sercos qui effectue une affectation des instructions contenues dans les instructions de commande (34) aux éléments de transport (28a-28e) situés dans la zone de l'unité d'entraînement respective (14a-14c).

8. Système de transport (10) selon l'une au moins des revendications précédentes,
**caractérisé en ce que**
au moins deux des unités d'entraînement (14a-14c) comprennent chacune plusieurs régulateurs (24), en particulier en cascade, l'un des régulateurs (24) étant réalisé pour effectuer une régulation respective pour l'un des éléments de transport (28a-28e).

9. Système de transport (10) selon l'une au moins des revendications précédentes,
**caractérisé en ce que**
la commande centrale (12) est réalisée pour imposer un profil de mouvement pour au moins deux des éléments de transport (28a-28e) et pour le transmettre aux unités d'entraînement (14a-14c) au moyen de la connexion de données (16).

10. Système de transport (10) selon l'une au moins des revendications précédentes,
**caractérisé en ce que**
les unités d'entraînement (14a-14c) sont directement connectées à la commande centrale (12) au moyen de la connexion de données (16).

11. Système de transport (10) selon l'une au moins des revendications précédentes,
**caractérisé en ce que**
le système de transport (10) est un système multi-porteurs comprenant plusieurs éléments de transport (28a-28e) mobiles indépendamment les uns des autres, dans lequel les éléments de transport (28a-28e) sont guidés sur une voie de guidage et sont déplacés le long de la voie de guidage au moyen des unités d'entraînement (14a-14c), les éléments de transport (28a-28e) étant de préférence déplacés d'une unité d'entraînement (14a-14c) à la suivante.

12. Système de transport (10) selon l'une au moins des revendications précédentes,
**caractérisé en ce que**
les unités d'entraînement (14a-14c) comprennent des moteurs linéaires.

13. Procédé de commande d'un système de transport (10), en particulier d'un système multi-porteurs, dans lequel le système de transport (10) comprend une commande centrale (12), plusieurs unités d'entraînement (14a-14c), les unités d'entraînement (14a-14c) étant couplées à la commande centrale (12) au moyen d'une connexion de données (16), et plusieurs éléments de transport (28a-28e) qui déplacés au moyen des unités d'entraînement (14a-14c),
la commande centrale (12) transmettant des instructions de commande (34) aux unités d'entraînement (14a-14c), les instructions de commande (34) incitant les unités d'entraînement (14a-14c) à déplacer les éléments de transport (28a-28e) en fonction des instructions de commande (34), les instructions de commande (34) incluant des instructions pour déplacer au moins deux éléments de transport (28a-28e), les unités d'entraînement (14a-14c) traitant les instructions de commande (34) en fonction d'une position des éléments de transport (28a-28e),
**caractérisé en ce que**
au moins deux des unités d'entraînement (14a-14c), de préférence toutes les unités d'entraînement (14a-14c), reçoivent les mêmes instructions de commande (34), et
lesdites au moins deux des unités d'entraînement (14a-14c) filtrent, parmi les instructions de commande (34), les instructions pertinentes pour l'unité d'entraînement respective (14a-14c), les instructions pertinentes concernant ceux des éléments de transport (28a-28e) qui peuvent actuellement être déplacés avec l'unité d'entraînement respective (14a-14c).
